# EUROPEAN PATENT SPECIFICATION

(11) **EP 3 381 306 B1**
(45) Date of publication and mention of the grant of the patent: **04.11.2020**
(21) Application number: 18164097.0
(22) Date of filing: 26.03.2018
(51) Int. Cl.: A24F 47/00, H02J 7/00

(54) **BATTERY COMPARTMENT AND ELECTRONIC CIGARETTE HAVING SAME**
BATTERIEFACH UND ELEKTRONISCHE ZIGARETTE DAMIT
COMPARTIMENT DE BATTERIE ET CIGARETTE ÉLECTRONIQUE LE COMPRENANT

(30) Priority: 27.03.2017 CN 201720313340 U
(43) Date of publication of application: 03.10.2018
(73) Proprietor: Shenzhen IVPS Technology Co., Ltd., 518000 Shenzhen Guangdong (CN)
(72) Inventor: CHEN, Wen, Shenzhen, Guangdong 518000 (CN)
(74) Representative: IP-PAL Patent & Trademark Attorneys GmbH

(56) References cited:
- WO-A1-2016/165063
- US-A1- 2013 248 385
- US-A1- 2015 164 138

## Description

### TECHNICAL FIELD

The present disclosure relates to electronic cigarettes, in particular to a battery compartment and an electronic cigarette having the battery compartment.

### BACKGROUND

Electronic cigarettes are also known as virtual cigarettes, or E-atomizers. The electronic cigarette is a heat-not-burn product and provided with efficacies similar to those of the ordinary cigarette. For example, the electronic cigarette can refresh the smokers and satisfy their smoking addiction, making them happy and relaxed. Typically, the battery compartment has a main body and a cover. The cover is rotatably connected to the main body via a pivot. The cover defines an oblong through hole to enable the pivot to rotate therein, and the cover is thus opened and closed. However, the cover will wobble easily while the cover is opened. Furthermore, the cover will impact the main body and the lacquer on the surface of cover will be badly chipped when the cover rotated by an undesirable (too large) angle.

Therefore, there is room for improvement in the art.

US2015/164138 A1 discloses an electronic cigarette box and support mechanism; US 2013/0248385 A1 discloses an electronic cigarette container; WO 2016/165063 A1 discloses an electronic cigarette case.

### SUMMARY

The present invention provides a battery compartment according to independent claim 1. The present invention also provides an electronic cigarette having such a battery compartment according to claim 6.

The present disclosure relates to a battery compartment and an electronic cigarette having the battery compartment. The battery compartment includes a frame, a main body mounted to the frame, a cover rotatably mounted to the frame, and an elastic pushing rod mounted to the frame. The cover defines a blocking groove. The pushing rod is configured to extend to the blocking groove to elastically support the cover when the cover is rotated.

### BRIEF DESCRIPTION OF THE DRAWINGS

For a better understanding of the embodiments of the present disclosure or the technical scheme in the prior art, accompanying drawings needed in the description of the embodiments or the prior art are simply illustrated below. Obviously, the accompanying drawings described below are some embodiments of the present disclosure. For the ordinary skill in the field, other accompanying drawings may be obtained according to the structure shown in these accompanying drawings without creative work.
FIG.1 is an exploded perspective view of a battery compartment accordance with an embodiment.
FIG. 2 is a cross-sectional view of the battery compartment with a cover closed in accordance with an embodiment.
FIG. 3 is a cross-sectional view of the battery compartment with the cover opened in accordance with an embodiment.
FIG. 4 is an isometric view of the cover shown in FIG. 1 in accordance with an embodiment.

### DETAILED DESCRIPTION

A clear and complete description as below is provided for the technical scheme in the embodiments of the present disclosure in conjunction with the drawings in the embodiments of the present disclosure. Obviously, the embodiments described herein after are simply part embodiments of the present disclosure, but all the embodiments. All other embodiments obtained by the ordinary skill in the art based on the embodiments in the present disclosure without creative work are intended to be included in the scope of protection of the present disclosure.

It should be noted that all directional indications (such as top, bottom, left, right, front, behind...) in the embodiments of the present disclosure are merely to illustrate a relative position relation, a relative motion condition, etc. between each part in a certain state (for example, the state shown in the drawings). If the state changes, the directional indication changes accordingly.

In addition, if terms "first", "second", etc. appear in the present disclosure, they are merely for the purpose of description, but cannot be understood as the indication or implication of relative importance or as the implicit indication of the number of the designated technical features; therefore, features defined by "first" and "second" may specifically or implicitly include one or more such features. In the description of the present disclosure, unless otherwise stated, "a plurality of" means at least two, for example, two, three, etc.

In the present disclosure, unless otherwise specifically stated and defined, terms "connected", "fixed", etc. should be interpreted expansively. For example, "fixed" may be fixed connection, also may be detachable connection, or integration; may be mechanical connection, also may be electrical connection; may be direct connection, also may be indirect connection through an intermediate, and may be internal communication between two elements or interaction of two elements, unless otherwise specifically defined. The ordinary skill in this field can understand the specific implication of the above terms in the present disclosure according to specific conditions.

In addition, technical schemes of each embodiment of the present disclosure maybe combined mutually; however, this must be carried out on the basis that the or ordinary skill in this field can implement the combination. When the combination of technical schemes has a conflict or cannot be implemented, it should be considered that such combination of technical schemes does not exist and is not in the scope of protection claimed by the present disclosure.

The present disclosure relates to a battery compartment for an electronic cigarette, aiming to solve the problem of wobble in structure in related art.

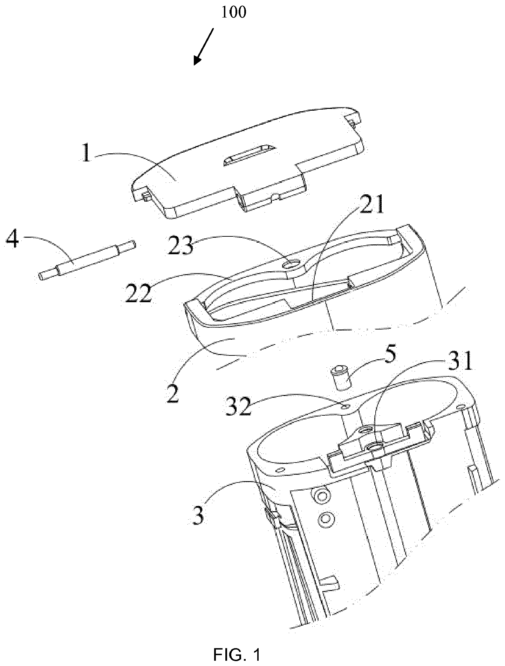

Referring to FIGs. 1-4, in one exemplary embodiment, a battery compartment 100 includes a frame 3, a main body 2 mounted on the frame 3, a cover 1 having a blocking groove 12 roatably mounted to the main body 2via a pivot 4, and an elastic pushing rod 5assembled to the frame 3.When the cover 1 is rotated, the pushing rod 5 extends into the blocking groove 12 to elastically resist against the cover 1. It is also understood that, the pushing rod 5 contacts to a position of the cover 1 corresponding to the blocking groove 12 to exert an elastic force to resist against the cover 1.

As illustrated in FIG.1, the frame 3 defines a receiving hole 31, and a first threaded hole 23. The frame 3 is made of plastic materials.

The pushing rod 5 is received in the receiving hole 31 and fixed to the frame 3. The pushing rod 5 is an elastic element made of rubber material. In some embodiments, the pushing rod 5 can also be an extend-retract structure which includes a sleeve (not labeled), and a rod (not labeled) and a spring (not labeled) received in the sleeve. The spring is limited between the rod and the sleeve. The spring enables the rod to extend or retract with respect to the sleeve.

As illustrated in FIG.1, the main body 2 defines a second threaded hole 23. The main body 2 is fixed on the frame 3 via a screw being engaged with the first threaded hole 31 and the second threaded hole 23. The main body 2 further defines a concaved portion 21, the concaved portion 21 defines two opposites pivot holes (not labeled). The main body 2 further includes a stepping suture 22accommodated with the cover 1. So that, an outer surface of the cover 1 away from the main body 2 and an outer surface of the main body 2 away from the frame 3 are on a same plane when the cover 1 is closed.

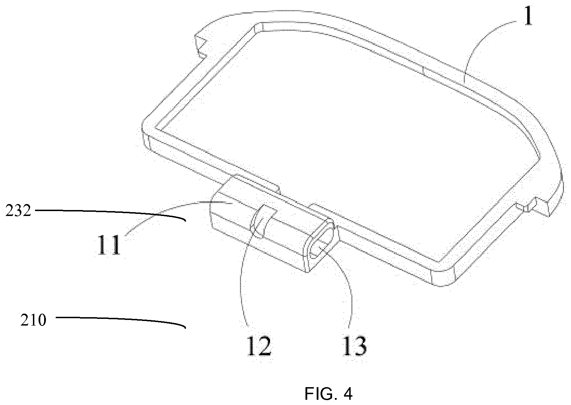

As illustrated in FIG.4, the cover 1 includes a protrusion portion 11 extending from an end of the cover 1. The protrusion portion 11 defines a through hole 13 running through two opposite ends of the protrusion portion 11. The pivot 4 is inserted into and rotated in the through hole 13 to enable the cover 1 to rotate with respect to the main body 2. The through hole 13 is an oblong through hole. The blocking groove 12 is defined on the protrusion portion 11. Accurately, the blocking groove 12 is concaved from an inner surface of the cover 1 facing the main body 2, thus, the cover 1 forms a bottom side (not labeled) and a sidewall (not labeled) extending from an end of the bottom side on the cover 1. The side wall is far away from the end of the cover 1 extending the protrusion portion 11.

As illustrated in FIG.1, the pivot 4 includes a main portion (not labeled) and two opposite ends (not labeled) located at opposite ends of the main portion. A length of the main portion is the same with that of the through hole 13 along a center axis of the through hole. A diameter of the limiting portion is smaller than that of the pivot holes. The main portion is located in the through hole 13 of the cover 1, the two opposite ends oppositely extend out of the through hole 13 to inserted into the pivot holes of the main body 2. Thus, the pivot 4 enables the cover 1 to rotatably mount to the main body 2.

When assembled, first, the pivot 4 is inserted into the through hole 13 of the cover 1. In detail, the main portion is located in the through hole 13, and the two opposite ends extend out of the protrusion portion via the through hole 13. Second, the cover 1 is assembled to the main body 10. In detail, the cover 40 together with the pivot 30 are positioned above the main body 10 that the protrusion is in alignment with the concaved portion 21, and then the cover 1 is gradually moved to the main body 10 to make the protrusion portion 11 gradually insert into the concaved portion 21 and the opposite ends are pressed to deform. When the two opposite ends move to the pivot holes, the opposite ends are correspondingly extended into the pivot holes to mount the cover 1 to the main body 2. Third, the pushing rod 5 is placed into the receiving hole 31 and fixed in the frame 3. Fourth, the main body 2 is fixed on the frame 3. In detail, a screw is engaged with the first threaded hole23 of the main body 2 and the second threaded hole 32, thus the main body 2 and the frame 3 are firmly interconnected. Thus, the assembly of the case 100 is finished.

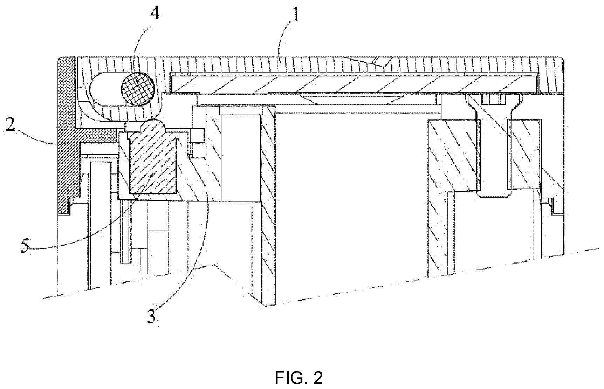

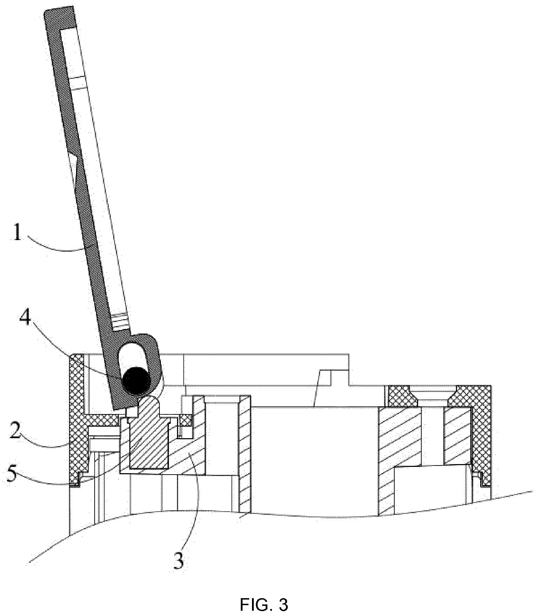

As illustrated in FIG.3, when the cover 1 is rotated to open, the pushing rod 5 is supported the bottom side corresponding to the blocking groove 12, and the cover 1 is thus prevented from swaying under the action of an elastic force provided by the pushing rod 5. As illustrated in FIG.2, when the cover 1 is sufficiently opened, the pushing rod 5 resistances against a sidewall of the cover 1, and the cover 1 is thus prevented from rotating to impact the main body 2, and lacquer on the surface of cover 5 will avoid badly chipping.

Simultaneously, when the cover 1 is closed, the pushing rod 5 supports the cover 1, the cover 1 will avoid dropping off from the main body 2. Furthermore, the elastic force is exerted to the cover 1 to resist against the cover 1 when the covered is opened, so that the cover 1 will be not opened while the cover 1 is gently pushed by chance.

The present disclosure also provides an electronic cigarette (not shown). The electronic cigarette includes the battery compartment 100 described above and an atomizer coupled to the battery compartment described above. Accordingly, the electronic cigarette can be retained stabilization.

## Claims

1. A battery compartment(100), comprising:
a frame (3);
a main body (2) mounted to the frame (3);
a cover (1) rotatably mounted to the main body (2), the cover (1) defining a blocking groove (12); and
an elastic pushing rod (5)mounted on the frame (3), the pushing rod (5)being configured for inserting into the blocking groove (12) to elastically support the cover (1) when the cover (1) is rotated,
**characterized in that**:
an end of the cover (1) extends to form a protrusion portion (11), the blocking groove (12) is defined on the protrusion portion (11), the main body (2) defines a concaved portion (21), and the protrusion portion (11) is accommodated in the concaved portion (21);
the battery compartment (100) further comprises a pivot (4), wherein the pivot (4) enables the cover (1) to rotatably mount to the main body (2), the pivot (4) comprises two opposite ends, the pivot (4) is rotatably inserted into the protrusion portion (11), the two opposite ends oppositely extend out of the protrusion portion (11) and insert into the main body (2);
the concaved portion (21) defines two opposite pivot holes, the two opposite ends are respectively inserted into the two opposite pivot holes.

2. The battery compartment (100) according to claim 1, wherein the pivot (4) further comprises a main portion rotatably received in the protrusion portion (11), the two opposite ends extend from the main portion, a length of the main portion is larger than that of the through hole (13) along an axis of the through hole (13).

3. The battery compartment (100) according to claim 1, wherein the protrusion portion (11) further defines a through hole (13), the through hole (13) is an oblong hole and the pivot (4) is rotatably received in the through hole (13).

4. The battery compartment(100) according to claim 1, wherein the blocking groove (12) is concaved from an inner surface of the cover (1) facing the main body (2), and the cover (1) further comprises a bottom side, and a sidewall, the sidewall extends from an end of the bottom side and is away from the end of the cover(1) extending the protrusion portion (11), the pushing rod (5) supports the bottom side when the cover(1) is rotated, the pushing rod(5) abuts against the sidewall when the cover(1) is opened.

5. The battery compartment (100) according to claim 1, wherein the main body (2) comprises a stepped portion accommodated with the cover (1).

6. An electronic cigarette, comprising:
an atomizer, and
a battery compartment (100) according to any of claims 1-5, the battery compartment (100) being coupled to the atomizer.

7. The electronic cigarette to claim 6, wherein the protrusion portion (11) further defines a through hole (13), the through hole (13) is an oblong hole and the pivot (4) is rotatably received in the through hole (13).

8. The electronic cigarette to claim 6, wherein the blocking groove (12) is concaved from an inner surface of the cover (1) facing the main body (2), and the cover (1) further comprises a bottom side, and a sidewall, the sidewall extends from an end of the bottom side and is away from the end of the cover (1) extending the protrusion portion (11), the pushing rod (5) supports the bottom side when the cover (1) is rotated, the pushing rod (5) abuts against the sidewall when the cover (1) is opened.

## Patentansprüche

1. Batteriefach (100), umfassend:
eine Halterung (3);
einen an der Halterung (3) montierten Hauptkörper (2);
eine Abdeckung (1), die drehbar am Hauptkörper (2) angebracht ist, wobei die Abdeckung (1) eine Blockiernut (12) definiert; und
eine elastische Schubstange (5), die an der Halterung (3) angebracht ist, wobei die Schubstange (5) zum Einsetzen in die Blockiernut (12) konfiguriert ist, um die Abdeckung (1) elastisch zu stützen, wenn die Abdeckung (1) gedreht wird,
**dadurch gekennzeichnet, dass**
sich ein Ende der Abdeckung (1) erstreckt, um einen Vorsprungabschnitt (11) zu bilden, die Blockiernut (12) auf dem Vorsprungabschnitt (11) definiert ist, der Hauptkörper (2) einen konkaven Abschnitt (21) definiert und der Vorsprungabschnitt (11) in dem konkaven Abschnitt (21) untergebracht ist;
das Batteriefach (100) ferner einen Drehzapfen (4) umfasst, wobei der Drehzapfen (4) ermöglicht, dass die Abdeckung (1) drehbar am Hauptkörper (2) montiert werden kann, der Drehzapfen (4) zwei gegenüberliegende Enden umfasst, der Drehzapfen (4) drehbar in den Vorsprungsabschnitt (11) eingeführt ist, wobei die zwei gegenüberliegenden Enden sich entgegengesetzt aus dem Vorsprung (11) heraus erstrecken und in den Hauptkörper (2) einsetzen;
wobei der konkave Abschnitt (21) zwei gegenüberliegende Drehlöcher definiert, wobei die beiden gegenüberliegenden Enden jeweils in die beiden gegenüberliegenden Drehlöcher eingesetzt sind.

2. Batteriefach (100) nach Anspruch 1, wobei der Drehzapfen (4) ferner einen Hauptabschnitt umfasst, der drehbar in dem Vorsprungsabschnitt (11) aufgenommen ist, wobei sich die beiden gegenüberliegenden Enden vom Hauptabschnitt erstrecken, wobei eine Länge des Hauptabschnitts größer ist als die des Durchgangslochs (13) entlang einer Achse des Durchgangslochs (13).

3. Batteriefach (100) nach Anspruch 1, wobei der Vorsprungsabschnitt (11) ferner ein Durchgangsloch (13) definiert, das Durchgangsloch (13) ein Langloch ist und der Drehzapfen (4) drehbar in dem Durchgangsloch (13) aufgenommen ist.

4. Batteriefach (100) nach Anspruch 1, wobei die Blockiernut (12) von einer dem Hauptkörper (2) zugewandten Innenfläche der Abdeckung (1) konkav ist und die Abdeckung (1) ferner eine Unterseite und eine Seitenwand umfasst, wobei sich die Seitenwand von einem Ende der Unterseite erstreckt und von dem Ende der Abdeckung (1), die den vorstehenden Teil (11) verlängert, entfernt ist, wobei die Schubstange (5) die Unterseite stützt, wenn die Abdeckung (1) gedreht wird, wobei die Schubstange (5) beim Öffnen der Abdeckung (1) an die Seitenwand anliegt.

5. Batteriefach (100) nach Anspruch 1, wobei der Hauptkörper (2) einen abgestuften Abschnitt umfasst, der in der Abdeckung (1) untergebracht ist.

6. Elektronische Zigarette, umfassend:
einen Zerstäuber und
ein Batteriefach (100) gemäß einem der Ansprüche 1 bis 5, wobei das Batteriefach (100) mit dem Zerstäuber gekoppelt ist.

7. Elektronische Zigarette nach Anspruch 6, wobei der Vorsprungsabschnitt (11) ferner ein Durchgangsloch (13) definiert, das Durchgangsloch (13) ein Langloch ist und der Drehzapfen (4) drehbar in dem Durchgangsloch (13) aufgenommen ist.

8. Elektronische Zigarette nach Anspruch 6, wobei die Blockiernut (12) von einer dem Hauptkörper (2) zugewandten Innenfläche der Abdeckung (1) konkav ist und die Abdeckung (1) ferner eine Unterseite und eine Seitenwand umfasst, wobei sich die Seitenwand von einem Ende der Unterseite erstreckt und von dem Ende der Abdeckung (1), die den vorstehenden Teil (11) verlängert, entfernt ist, wobei die Schubstange (5) die Unterseite stützt, wenn die Abdeckung (1) gedreht wird, wobei die Schubstange (5) beim Öffnen der Abdeckung (1) an die Seitenwand anliegt.

## Revendications

1. Compartiment de batterie (100),
comprenant : un cadre (3) ;
un corps principal (2) monté sur le cadre (3) ;
un couvercle (1) monté rotatif sur le corps principal (2), le couvercle (1) définissant une rainure de blocage (12) ; et
une tige de poussée élastique (5) montée sur le cadre (3), la tige de poussée (5) étant conçue pour être insérée dans la rainure de blocage (12) pour supporter de manière élastique le couvercle (1) lorsque le couvercle (1) est tourné, **caractérisé en ce que** :
une extrémité du couvercle (1) s'étend pour former une partie saillante (11), la rainure de blocage (12) est définie sur la partie saillante (11), le corps principal (2) définit une partie concave (21) et la partie saillante (11) est hébergée dans la partie concave (21) ;
le compartiment de batterie (100) comprend en outre un pivot (4) le pivot (4) permettant au couvercle (1) de se monter rotatif dans le corps principal (2), le pivot (4) comprenant deux extrémités opposées, le pivot (4) étant inséré rotatif dans la partie saillante (11), les deux extrémités opposées de façon opposée s'étendent hors de la partie saillante (11) et s'insèrent dans le corps principal (2) ;
la partie concave (21) définit deux trous de pivot opposés, les deux extrémités opposées sont respectivement insérées dans les deux trous de pivot opposés.

2. Compartiment de batterie (100) selon la revendication 1, dans lequel le pivot (4) comprend en outre une partie principale reçue rotative dans la partie saillante (11), les deux extrémités opposées s'étendent depuis la partie principale, une longueur de la partie principale est supérieure à celle du trou traversant (13) le long d'un axe du trou traversant (13).

3. Compartiment de batterie (100) selon la revendication 1, dans lequel la partie saillante définit en outre un trou traversant (13), le trou traversant (13) est un trou oblong et le pivot (4) est reçu rotatif dans le trou traversant (13).

4. Compartiment de batterie (100) selon la revendication 1, dans lequel la rainure de blocage est concave à partir d'une face intérieure du couvercle (1) en regard du corps principal (2) et le couvercle (1) comprend en outre un côté inférieur et une paroi latérale, la paroi latérale s'étend depuis l'extrémité du côté inférieur et est éloignée de l'extrémité du couvercle (1) prolongeant la partie saillante (11), la tige de poussée (5) supporte le côté inférieur lorsque le couvercle (1) est tourné, la tige de poussée (5) vient en butée contre la paroi latérale lorsque le couvercle (1) est ouvert.

5. Compartiment de batterie (100) selon la revendication 1, dans lequel le corps principal (2) comprend une partie étagée logée avec le couvercle (1).

6. Cigarette électronique, comprenant :
un atomiseur ; et
un compartiment de batterie (100), selon l'une quelconque des revendications 1 à 5, le compartiment de batterie (100) étant accouplé à l'atomiseur.

7. Cigarette électronique selon la revendication 6, dans lequel la partie saillante (11) définit en outre un trou traversant (13), le trou traversant (13) est un trou oblong et le pivot (4) est reçu rotatif dans le trou traversant (13).

8. Cigarette électronique selon la revendication 6, dans laquelle la rainure de blocage (12) est concave à partir d'une face intérieure du couvercle (1) en regard du corps principal (2) et le couvercle (1) comprend en outre un côté inférieur et une paroi latérale, la paroi latérale s'étend depuis l'extrémité du côté inférieur et est éloignée de l'extrémité du couvercle (1) prolongeant la partie saillante (11), la tige de poussée (5) supporte le côté inférieur lorsque le couvercle (1) est tourné, la tige de poussée (5) vient en butée contre la paroi latérale lorsque le couvercle (1) est ouvert.
